**Europäisches Patentamt**

**European Patent Office**

**Office européen des brevets**

(19)

(11) **EP 1 158 684 A1**

(12) ## EUROPEAN PATENT APPLICATION

(43) Date of publication:
**28.11.2001 Bulletin 2001/48**

(51) Int Cl.7: **H04B 1/10**, H04B 7/005

(21) Application number: **00304437.7**

(22) Date of filing: **25.05.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | • **Meyer, Raimund Dr.**<br>**Nuremberg 90449 (DE)**<br>• **Obernosterer, Frank Gerhard Ernest Dr.**<br>**Weissenohe 91367 (DE)** |
| (71) Applicant: **LUCENT TECHNOLOGIES INC.**<br>**Murray Hill, New Jersey 07974-0636 (US)** | (74) Representative: **Williams, David John et al**<br>**Lucent Technologies UK Limited,**<br>**5 Mornington Road**<br>**Woodford Green, Essex IG8 0TU (GB)** |
| (72) Inventors:<br>• **Heinrich, Gerd**<br>**Buckenhof 91054 (DE)** | |

(54) **Method and device for detecting adjacent channel interference in a transmission signal**

(57)    The invention presents a new and improved way of detecting adjacent channel interference on a transmission channel, with which even weak adjacent channel interference is detected with significantly greater reliability. To this end, a method is proposed in which an estimation and/or reconstruction of at least one sequence ($h_1$, $h_2$) of features of the received signal which has not been subjected to interference are carried out using features contained in a received signal "r" by applying a process identification procedure, and/or, using the latter as a basis, a functional relation is formed between derived features ($y_1$, $y_2$) and corresponding features ($v_1$, $v_2$) contained in the received signal. An apparatus which is suitable for this method comprises a device for receiving a signal which is transmitted on the transmission channel, an analyser device (20) for extracting individual features based on the received signal, and a device for evaluating (30) the extracted features.

**EP 1 158 684 A1**

**Description**

The invention relates to a method and a device for detecting adjacent channel interference on a transmission channel, in particular in FDMA-based transmission systems.

During the digital transmission over dispersive channels, for example over a mobile radio channel, the transmit signal is distorted and subjected to interference due to noise and/or sources of common-channel interference and/or adjacent channel interference. For this reason, specific measures to recover the transmitted data are necessary in the receiver, said measures generally being referred to as equalization. An analog and/or digital filter for performing suitable band limiting on the received signal comprises an essential component of the receiver, and in the wider sense also of the equalization means in systems which operate according to the frequency-division multiple access principle (FDMA systems).

The efficiency of the receiver in terms of recovering the transmitted data with as few errors as possible depends essentially on the type and magnitude of the interference on the transmission channel. For optimum equalization, it is necessary to have as precise knowledge as possible about the interference, for example about its statistical properties. If, for example, interference due to approximately additive, white noise with Gaussian distribution (AWGN) is predominant on the channel, other measures for optimum equalization, in particular in terms of the filtering of the received signal, have to be taken than when there is a source of adjacent channel interference.

To detect a source of adjacent channel interference, until now use has been made of a method which is based on the analysis of the received signal energy in the area of influence of the frequency of the source of adjacent channel interference. Here, the portion of signal energy "$E_{adj}$" lying at the edges or outside the useful frequency band is determined using, for example spectral analysis. By standardizing to the total amount of energy "$E_{ges}$" and comparing with a suitable threshold, a source of adjacent channel interference can subsequently be identified.

According to this known method, a source of adjacent channel interference is thus present if the ratio of the signal energy determined in the spectral region of influence of the adjacent channel to the total energy of the portion of the received signal in question, i.e. $E_{adj}/E_{ges}$, is greater than the selected threshold.

If the ratio formed from the signal energy determined in the spectral region of influence of the adjacent channel to the total energy of the portion of the received signal in question, that is to say $E_{adj}/E_{ges}$, is, however, the same as or smaller than the predefined threshold, it is concluded that there is no source of adjacent channel interference present.

The use of this method proves particularly disadvantageous if there is a source of adjacent channel interference present, but this has a relatively low signal level in the region of the useful frequency band with the result that the standardized signal energy $E_{adj}/E_{ges}$ does not exceed the defined threshold.

Consequently, in such a case, there is the possibility that a source of adjacent channel interference which is present incorrectly fails to be detected although this source of adjacent channel interference can still adversely affect the transmission and subject it to interference.

In addition, the spectral distribution of the useful signal energy is strongly dependent, in particular in the case of the frequently used block-type data transmission, for example in the case of GSM (Global System for Mobile Communication) and/or mobile radio systems operating according to the time-division multiple access principle (TDMA systems), on the respective data content and on the instantaneous transmission channel properties, for example the radio propagation conditions.

For individual blocks there may thus be a large degree of deviation of the spectral distribution of the useful signal energy with respect to its long-term mean, with the result that an instantaneous concentration of the useful signal energy at the edges of the useful frequency band can easily be misinterpreted as a source of adjacent channel interference.

The object of the invention is to present an improved way of detecting a source of adjacent channel interference which is new in comparison with the prior art and with which even weak sources of adjacent channel interference are detected with significantly greater reliability.

The solution of the object according to the invention is provided by means of a method having the features of Claim 1 and a device which is suitable for carrying out the method and has the features of Claim 8.

Advantageous developments of the invention are the subject-matter of the subclaims.

The invention provides that, to detect adjacent channel interference on a transmission channel, in particular in FDMA-based transmission systems, an estimation and/or reconstruction of at least one sequence of features of the received signal which has not been subjected to interference are carried out using features contained in a received signal in question by applying a process identification procedure, and/or, using the latter as a basis, a functional relation is formed between derived features and corresponding features contained in the received signal.

The method according to the invention ensures reliable detection of the "source of adjacent channel interference" type of interference, in particular in FDMA-based digital transmission systems such as the GSM mobile radio system, with the result that, after the presence of such interference has been detected, suitable measures can be taken in the receiver device, for example the suppression of interference by, in particular adaptive filtering.

Depending on the selection of the process model used for identification it is possible, while ensuring that even weak sources of adjacent channel interference are also reliably detected, to reduce significantly the arithmetic complexity caused and/or to dispense with specific a-priori knowledge of the transmission channel.

It has proven particularly expedient to use the autocorrelation properties of at least one directly and/or indirectly derived sequence of features as a basis for detection.

In a preferred refinement there is also provision for further suitable features to be derived, in particular to determine a signal-to-noise ratio and for said features also to be used as a basis for the detection.

The received signal is advantageously divided up into a plurality of signal sequences before the execution of the process identification procedure by sampling and filtering with different bandwidths. As a result, it is possible to ensure that a source of adjacent channel interference is represented in each of the sequences of sampled values with energy components of different sizes, which additionally increases the reliability of the detection.

In order to ensure an unambiguous, essentially error-free detection process, there is provision for derived features, which are expediently stored in a vector diagram, to be mapped onto an individual variable, in particular non-linearly. An artificial neural network is preferably suitable for this because in such a network probability distributions which are inherent in the problem are largely negligible and such a neural network can be expediently adapted very satisfactorily to the respective application using training data.

It is also advantageous that with the method according to the invention it is not necessary to perform averaging over a plurality of reception blocks.

The invention is also implemented in a device which, in addition to a device for receiving a signal transmitted on the transmission channel, comprises an analyser device for extracting individual features based on the received signal, and a device for evaluating the extracted features.

The method according to the invention and the device proposed for carrying it out thus permit a significant improvement in terms of more reliable detection of sources of adjacent channel interference than the prior art and, moreover, permit, in conjunction with further suitable measures such as adaptive filtering, the efficiency of receivers to be increased, in particular in FDMA-based digital transmission systems. This applies in particular to block-type data transmission, for example in mobile radio systems, for which averaging over a plurality of blocks is not possible owing to the interference conditions (for example in the case of frequency hopping) which vary greatly from block to block.

The invention is described in detail below by means of preferred exemplary embodiments and with reference to the appended drawings, in which:

Fig. 1    shows a schematic block circuit diagram relating to various processing stages of a received input signal for the purpose of detecting a source of adjacent channel interference according to the invention,

Fig. 2    shows two exemplary embodiments relating to the first processing stage according to Fig. 1,

Fig. 3    shows an exemplary embodiment relating to the second processing stage according to Fig. 1, and

Fig. 4    shows two exemplary, schematically idealized spectra of a received signal which spectra have been subject to interference.

The proposed way according to the invention of detecting sources of adjacent channel interference of a transmission channel, in particular in systems for transmitting digital information and/or data, is described below by way of example, on the basis of a transmission such as occurs using the frequency-division multiple access (FDMA) method, such as in particular in mobile radio systems which operate according to the GSM standard (Global System for Mobile Communication) and/or the time-division multiple access (TDMA) principle.

In addition, it is to be noted that it is assumed in the statements below, without restricting their general applicability, that block-type transmission expediently takes place with the integration of a sequence of training symbols which is known to the receiver. However, such a sequence can also be replaced by symbols estimated in the receiver.

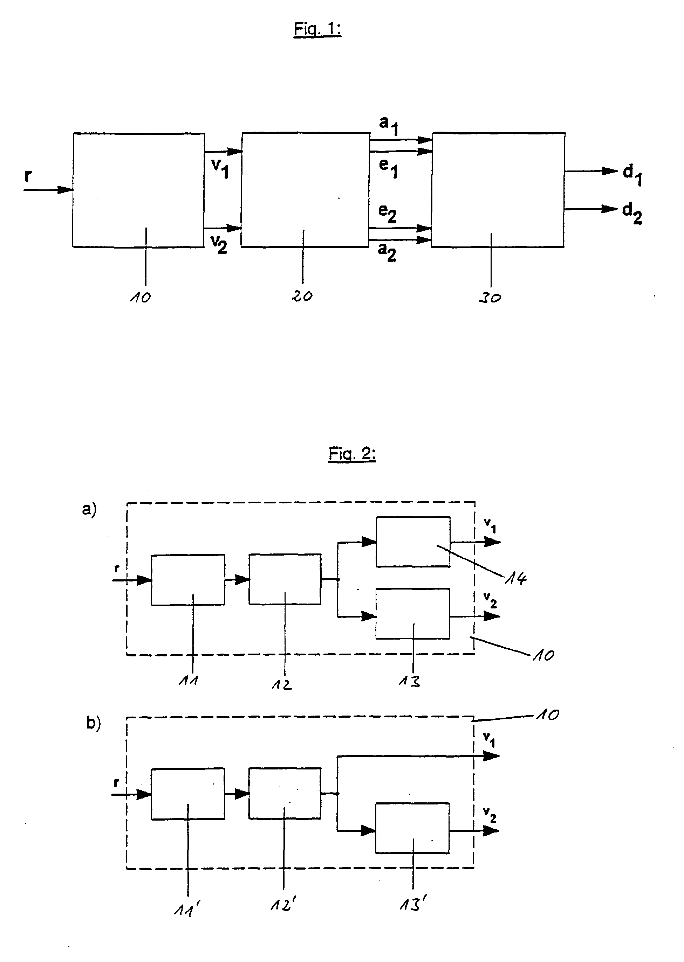

Fig. 1 illustrates schematically the processing of a received input signal "r" in a receiver unit for the purpose of detecting sources of adjacent channel interference, in three functional blocks. The block which is indicated with the reference symbol 10 contains here filter and sampling devices of the receiver unit. The received signal "r" is converted into at least two time-discrete signal sequences "v1" and "v2", and when there is a source of adjacent channel interference present at least one of said signal sequences "v1" and "v2" is influenced by it. Possible sequential arrangements of filtering and sampling devices are given by way of example in Fig. 2.

According to the sequence in Fig. 2 designated by a), the received signal "r" initially passes through an analog filter 11 and is subsequently sampled using an A/D converter 12 and quantified. The time-discrete sequence which is made available at the output of the converter 12 is subsequently filtered by means of two digital filters 14 and 13 connected in parallel, each with a different bandwidth, so that as a result of this procedure two time-discrete signal sequences $v_1$ and $v_2$ which are derived from the received signal are available for further processing. In a modification of this, according to Fig. 2b) a signal sequence $v_1$ is available as soon as it has passed through an analog filter 11' and an A/D converter 12'. On the other hand, the signal path for the signal sequence $v_2$ comprises a further digital filter 13'.

The decisive feature of the method steps covered by the processing block 10 is thus the fact that the sequences of sampled values $v_1$ and $v_2$ located at the end are filtered with filters with different bandwidths in order to have different energy components from the source of adjacent channel interference, if one is present.

In an ideal case, the signal $v_1$ is, for example, broadband-filtered and thus contains energy components of the adjacent channel interference which is caused by the source of adjacent channel interference, while the signal $v_2$ no longer contains any energy components of adjacent channel interference owing to a narrowband, that is to say highly selective, filtering.

Because in a receiver the precise implementation of a suitable processing block 10, including the sequence of analog filtering, digital filtering and sampling, is, however, essentially freely selectable and/or has to satisfy particular requirements depending on the specific application and is part of the knowledge that a person skilled in the art will have in this area, further details on this are not given here.

Details are given below, with reference to Fig. 2, on the further processing which follows the filtering and sampling of the received signal "r" and is indicated in Fig. 1 by the functional block 20.

According to Fig. 2, a plurality of features are in turn acquired from the sequences $v_1$ and $v_2$ by signal analysis and/or process identification. Initially, an estimation of the associated pulse responses $h_1$ and $h_2$, respectively, is carried out separately for each signal $v_1$ and $v_2$ in the blocks in Fig. 2 which are provided with the references 21 and 25, by estimating the respective transmission channel. This is expediently carried out, as already mentioned above, on the basis of a sequence of training symbols embedded in the data stream, as is the case, for example, in GSM mobile radio systems. For the actual estimation, in particular a parameter estimation method based on the maximum likelihood (ML) method is provided in the present exemplary embodiment.

The channel estimation for extracting an associated sequence of pulse responses can, however, also in particular in the event of no training symbol sequences being present, be carried out by using so-called "blind channel estimation" (blind estimation) methods which are known per se to a person skilled in the art.

Subsequent to this, at the processing stages designated by 22 and 126 the sampled values of a signal sequence $y_1$ or $y_2$ which, in comparison with the received signal "r", is not subject to interference, are reconstructed, with the addition of the training symbols "s" which are known to the receiver or are possibly estimated in the receiver and the respectively estimated pulse responses $h_1$ and $h_2$ of the length L, by means of the convolution sum

$$y_v[k] = \sum_{\kappa=0}^{L-1} h_v[\kappa] S_v[k-\kappa], \text{ where } v \in \{1; 2\}.$$

If N is the number of training symbols and K is the number of reconstructed sample values, where $K \leq N - L + 1$, then $k \in \{0...K-1\}$.

These reconstructed signal sequences $y_1$ and $y_2$ are subsequently respectively subtracted from the input sequence $v_1$ and $v_2$, by which means the two difference sequences $z_1$ and $z_2$ are derived by means of the relation

$$Z_v[k] = v_v[k] - y_v[k], \text{ where } v \in \{1; 2\}.$$

After this, in the next step 23 or 27 the autocorrelation sequences $a_1$ and $a_2$ of the difference signals $z_1$ and $z_2$ are formed by respective sum formation of the product of a difference signal $z_v$ with its conjugate complex signal, displaced by a sampled value $\mu$ in accordance with

$$a_v[\mu] = \sum_k z_v[k] z_v[k-\mu] ,$$

where $v \in \{1; 2\}$ and $\mu \in \{0;...;M-1\}$.

In addition, in the processing stages 24 and 28, the energy values of the estimated pulse responses $h_1$ and $h_2$ are determined by means of the respective sum of the absolute square values according to the rule

$$e_v = \sum_{\kappa=0}^{L-1} |h_v[k]|^2, \text{ where } v \in \{1; 2\}.$$

These sequences of features which were extracted on the basis of the received signal "r" form the basis for the following stage 30 according to Fig. 1, which includes calculation of a decision as to whether a transmission in an adjacent channel of the transmission channel in question is at least to a certain extent superimposed on the latter as interference.

The extracted information or features contained in the abovementioned variables $a_v$ and $e_v$ are fed, embedded into an input vector, to a mapping matrix, in particular a non-linear one. The coefficients of such a matrix can be determined empirically here.

As a result of the mapping, a binary variable $d_1$ is output, which variable $d_1$ indicates either the presence or the absence of such a source of adjacent channel interference. In the exemplary embodiment in Fig. 1, there is also provision that an estimated value for the signal level of such a source is specified using the variable $d_2$ as a second item of output information. The variable $d_2$ is available here in the form of a variable with continuous or discrete values.

The described mapping onto the variables $d_1$ and $d_2$ is implemented herein in accordance with the exemplary embodiment using an artificial neural network because such a network can be adapted very satisfactorily to the respective application using training data.

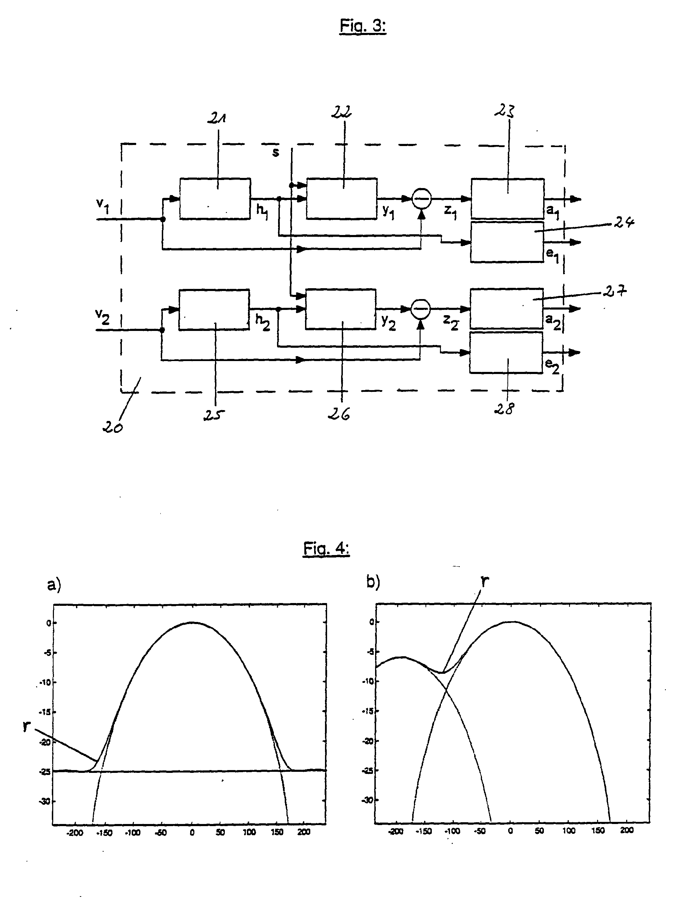

Because, in particular, the autocorrelation sequences are significant for this decision process, these are considered in greater detail below by means of an exemplary embodiment and with reference to Fig. 4.

Fig. 4 shows the idealized spectra of a received signal "r" which is dominated by noise in case a) and by adjacent channel interference in case b). In each case the frequency deviations from the average frequency of the useful signal in question are plotted on the abscissa in "kHz", and the respective signal levels are plotted on the ordinates in "dB". The noise in case a) thus has an essentially continuous signal level of approximately -25 dB over the frequency range in question. For a frequency which is offset by -200 kHz with respect to the average frequency of the useful signal, the adjacent channel interference according to Fig. 4b) has a maximum signal level of approximately -5 dB.

It will now be assumed, as was assumed above, that $v_1$ is subject to broader band filtering, for example a frequency range comprising from -150 to +150 kHz and $v_2$ is subject to narrower band filtering, for example, a range covering from -50 to +50 kHz. After the associated pulse responses have been estimated, the signal sequences $y_1$ and $y_2$ which are not subject to interference are then reconstructed and the respective autocorrelation sequence $a_1$ and $a_2$ respectively are formed.

Because in case a) in Fig. 4 the interference is represented with components which are essentially of the same magnitude despite being filtered differently in the two signal sequences, it is not possible to draw any definite conclusion for this case from the associated autocorrelation sequences. In example b) in Fig. 4, the adjacent channel interference is, however, represented with an essential component in $v_1$, whereas $v_2$ is, however, largely free of adjacent channel interference influences. The autocorrelation functions of the respective differences $(v_1 - y_1)$ and $(v_2 - y_2)$, respectively, thus exhibit profiles which are different in principle, so that the presence of a source of adjacent channel interference can be reliably identified on this basis alone.

The method according to the invention thus makes it possible to detect reliably the presence, and optionally, in particular with the inclusion of further derived sequences of features, the level of adjacent channel interference, in particular in FDMA-based digital transmission systems.

It thus lies within the scope of the invention to carry out the decision-making processes to determine whether or not a source of adjacent channel interference is present and, if appropriate, what is its magnitude in addition to the abovementioned extracted sequences, additionally making use of an evaluation of further directly or indirectly derived feature sequences. Further preferred information which may be possible here is, for example, an estimated signal energy value or an estimated value for the signal-to-noise ratio, in particular by means of the functional relations:

$$\frac{\frac{1}{\kappa}\sum_{\kappa=0}^{\kappa-1}\left|y_v[\kappa]\right|^2}{a_v[0]} \; or \; \frac{e_v}{a_v[0]}, \; \text{where} \; v \in \{1;2\}.$$

Because, in digital transmission systems, it is possible to obtain a virtually optimum level of efficiency only if the receiver is provided with the most precise information possible on the type of interference, it is possible respectively to optimize various parameters in the receiver by knowing whether the transmission is mainly adversely affected by a source of adjacent channel interference. Thus, it is possible, for example, to apply a filter which is individually adapted to the received signal, in particular a digital, adaptive filter, using this information, as a result of which the bit rate and block error rates can be respectively minimized to a significant degree.

It is to be noted that the process devices which are used for the detection, including the required computer, processor and storage devices and/or capacitors depend in particular also on the process models and/or structures which are required depending on the field of use and application situation and which are preselected on the basis of the knowledge of a person skilled in this art.

To conclude, it is to be noted that in the case of a device which comprises a receiver with a plurality of parallel reception paths, the inventive method described above can be applied individually to any path.

## Claims

1. Method for detecting adjacent channel interference on a transmission channel, in particular in FDMA-based transmission systems, **characterized in that** an estimation and/or reconstruction of at least one sequence ($h_1$, $h_2$) of features of the received signal which has not been subjected to interference are carried out using features contained in a received signal (r) by applying a process identification procedure, and/or, using the latter as a basis, a functional relation is formed between derived features ($y_1$, $y_2$) and corresponding features ($v_1$, $v_2$) contained in the received signal.

2. Method according to Claim 1, **characterized in that** the autocorrelation properties of at least one sequence ($z_1$, $z_2$) of features derived indirectly and/or directly from the received signal are used as a basis for detection.

3. Method according to Claim 1 or 2, **characterized in that**, before the process identification procedure is carried out, the received signal (r) is divided up into a plurality of sequences ($v_1$, $v_2$) by sampling and filtering with different bandwidths.

4. Method according to one of Claims 1 to 3, **characterized in that** the estimated signal energy and/or the estimated energy of the pulse response ($e_1$, $e_2$) and/or the signal-to-noise ratio (SNR) derived therefrom is used to detect adjacent channel interference.

5. Method according to one of Claims 1 to 4, **characterized in that** the detection of adjacent channel interference is carried out by integrating a sequence of training symbols (s) which is known to the receiver and is embedded in the received signal.

6. Method according to one of Claims 1 to 5, **characterized in that**, in order to detect adjacent channel interference, at least one sequence ($a_1$, $a_2$) of derived features is mapped non-linearly onto an individual variable.

7. Method according to Claim 6, **characterized in that** an artificial neural network is used for the non-linear mapping.

8. Device for detecting adjacent channel interference on a transmission channel, in particular in FDMA-based transmission systems, comprising a device for receiving a signal transmitted on the transmission channel, **characterized by** an analyser device (20) for extracting individual features based on the received signal, and a device for evaluating (30) the extracted features.

9. Device according to Claim 8, **characterized in that** the receiver device comprises a device (10) which is arranged upstream of the analyser device (20) and which comprises a signal path which has one input for the transmitted signal (r) and at least two outputs, filters (11, 11', 13, 13', 14) with different bandwidths being arranged between the input and the outputs.

10. Device according to Claim 8 or 9, **characterized in that** the analyser device (20) comprises a storage device in which a predefinable process model is stored.

Fig. 1:

Fig. 2:

a)

b)

Fig. 3:

Fig. 4:

a)

b)

**European Patent Office**

## EUROPEAN SEARCH REPORT

Application Number

EP 00 30 4437

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 715 282 A (BONTRAGER RICHARD ET AL) 3 February 1998 (1998-02-03) | 8,9 | H04B1/10 H04B7/005 |
| A | * column 1, line 13 - column 4, line 36; figures 1,2 * | 1-7,10 | |
| X | US 5 287 556 A (CAHILL STEPHEN V) 15 February 1994 (1994-02-15) | 8 | |
| A | * column 2, line 32 - column 3, line 19; figure 1 * | 1,2,4,6, 9,10 | |

**TECHNICAL FIELDS SEARCHED (Int.Cl.7)**

H04B

The present search report has been drawn up for all claims

| Place of search | Date of completion of the search | Examiner |
|---|---|---|
| THE HAGUE | 29 September 2000 | Andersen, J.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 00 30 4437

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2000

| Patent document cited in search report | | Publication date | Patent family member(s) | | Publication date |
|---|---|---|---|---|---|
| US 5715282 | A | 03-02-1998 | CA | 2253415 A | 13-11-1997 |
| | | | EP | 0920733 A | 09-06-1999 |
| | | | WO | 9742721 A | 13-11-1997 |
| US 5287556 | A | 15-02-1994 | CA | 2071866 A,C | 29-03-1992 |
| | | | DE | 4192408 C | 18-09-1997 |
| | | | GB | 2254757 A,B | 14-10-1992 |
| | | | HK | 39297 A | 11-04-1997 |
| | | | JP | 2663716 B | 15-10-1997 |
| | | | JP | 5502780 T | 13-05-1993 |
| | | | MX | 9101263 A | 04-05-1992 |
| | | | WO | 9206540 A | 16-04-1992 |

For more details about this annex : see Official Journal of the European Patent Office, No. 12/82